(19)

Europäisches Patentamt

European Patent Office

Office européen des brevets

(11) **EP 4 455 727 B1**

(12) **EUROPEAN PATENT SPECIFICATION**

(45) Date of publication and mention
of the grant of the patent:
**10.09.2025 Bulletin 2025/37**

(21) Application number: **24165059.7**

(22) Date of filing: **21.03.2024**

(51) International Patent Classification (IPC):
**G01S 13/42** *(2006.01)* **G01S 13/50** *(2006.01)*
**G01S 13/66** *(2006.01)* **G01S 13/87** *(2006.01)*
**G01S 13/931** *(2020.01)*

(52) Cooperative Patent Classification (CPC):
**G01S 13/931; G01S 13/42; G01S 13/505;
G01S 13/66; G01S 13/872;** G01S 2013/9327

(54) **UPDATING RADAR SENSOR ACCURACY MEASUREMENTS FOR OBJECT TRACKING**

AKTUALISIERUNG VON RADARSENSORGENAUIGKEITSMESSUNGEN ZUR
OBJEKTVERFOLGUNG

MISE À JOUR DE MESURES DE PRÉCISION DE CAPTEUR RADAR POUR SUIVI D'OBJET

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority: **26.04.2023 US 202318139531**

(43) Date of publication of application:
**30.10.2024 Bulletin 2024/44**

(73) Proprietor: **NXP B.V.**
**5656 AG Eindhoven (NL)**

(72) Inventors:
• **Paker, Özgün**
**5656 AG Eindhoven (NL)**

• **Koppelaar, Arie Geert Cornelis**
**5656 AG Eindhoven (NL)**

(74) Representative: **Schmütz, Christian Klaus
Johannes**
**NXP Semiconductors Germany GmbH
Intellectual Property Group
Beiersdorfstr. 12
22529 Hamburg (DE)**

(56) References cited:
**GB-A- 2 564 085**     **US-A1- 2004 075 605**
**US-A1- 2021 405 178**

**Description**

BACKGROUND

Radar is used to detect objects and provide information about the detected objects for use in a wide variety of applications. For example, radar systems can provide a detected object's location and velocity to support autonomous vehicular systems. Radar systems typically include one or more radar sensors to collect radar data and a central radar processor to perform higher level processing of the collected radar data. The radar sensors transmit radar signals, receive the radar signals after they reflect off of nearby objects, and generate radar sensor measurement data in the form of a "point cloud" (also referred to as a plurality of radar data points) with information gleaned from the received radar signal reflections. In some cases, this plurality of radar data points includes information such as a range (or a distance) to one or more objects, a velocity of the one or more objects, and an angle (e.g., azimuth and/or elevation) to the one or more objects. The radar sensor then communicates the plurality of radar data points to the central radar processor for higher level radar data processing such as object tracking.

GB 2 564 085 A relates to a digital signal processing system for radar comprising an Application Specific Integrated Circuit (ASIC) or Field Programmable Gate Array (FPGA), wherein the digital signal processing system receives samples from a plurality of channels where the channels are simultaneously sampled at a uniform sampling rate.

SUMMARY

The invention is defined in apparatus claim 1 and in corresponding method claim 6. Various example embodiments are directed to radar measurement data processing techniques for object tracking in radar systems.

BRIEF DESCRIPTION OF THE DRAWINGS

The present disclosure may be better understood, and its numerous features and advantages made apparent to those skilled in the art by referencing the accompanying drawings. The use of the same reference symbols in different drawings indicates similar or identical items.

FIG. 1 is a diagram of a vehicular control system implementing a radar system including a plurality of radar sensors and a central radar processor in accordance with some embodiments.

FIG. 2 is a diagram of a radar sensor as shown in FIG. 1 in accordance with some embodiments.

FIG. 3 is a diagram of a radar sensor and a central radar processor configuration in which the radar sensor is configured to generate a covariance matrix for one or more radar data points in the plurality of radar data points, in accordance with some embodiments.

FIG. 4 is a diagram of a radar sensor and a central radar processor configuration in which the radar sensor is configured to provide a signal-to-noise ratio (SNR) for one or more radar data points in the plurality of radar data points so that the central radar processor can generate a covariance matrix, in accordance with some embodiments.

FIG. 5 shows examples of a range covariance, a velocity covariance, and an azimuth (AZ) angle covariance for corresponding measurements from a radar sensor, in accordance with some embodiments.

FIG. 6 is a graph illustrating the relationship between covariance in range measurements and SNR, in accordance with some embodiments.

FIG. 7 is a graph illustrating the relationship between covariance in velocity measurements and SNR, in accordance with some embodiments.

FIG. 8 is a graph illustrating the relationship between covariance in angle measurements and the angle of point reflection for which the covariance is calculated for multiple SNR situations, in accordance with some embodiments.

FIG. 9 is a diagram of an object tracking processor such as the one illustrated in FIG. 3 or in FIG. 4, in accordance with some embodiments.

FIG. 10 shows examples of the effect of the Kalman gain of a Kalman filter implemented by an object tracking processor, such as the one illustrated in FIG. 9, in accordance with some embodiments.

FIG. 11 is a flowchart illustrating a method for a radar sensor to provide a data item along with the plurality of radar data points, in accordance with some embodiments.

FIG. 12 is a flowchart illustrating a method for an object tracking processor to receive a covariance matrix to utilize in a Kalman filter for updating an object tracking process, in accordance with some embodiments.

DETAILED DESCRIPTION

According to various aspects, an object tracking processing unit in a central radar processor tracks an object using a combination of radar sensor measurement data (i.e., the plurality of radar data points received from the radar sensors) and predictions of the object's position made by a motion model. In some cases, the object tracking processing unit executes operations according to an object tracking algorithm based on a Kalman filter to determine the respective weight of the radar sensor measurement data and the motion model's prediction in the calculations of the object tracking process. The Kalman filter is governed by a set of equations which are in part reliant on measurement accuracy values (or covariances) of the radar sensor measurement data. In some embodiments, these measurement accuracy values are represented as an observation noise covariance matrix, or covariance matrix for short. This covariance matrix is used to calculate the Kalman gain of the Kalman filter. The Kalman gain is used as the weighing parameter to determine the respective contribution of the radar sensor measurement data and of the motion models in the object tracking process. Conventional techniques include using a fixed covariance matrix that is tuned to a particular application for all of the update steps in the object tracking process. However, these conventional techniques are not adaptable to changes in radar parameters or in radar signal conditions and may thus lead to diminished performance and accuracy of a radar system's object tracking capability in different scenarios.

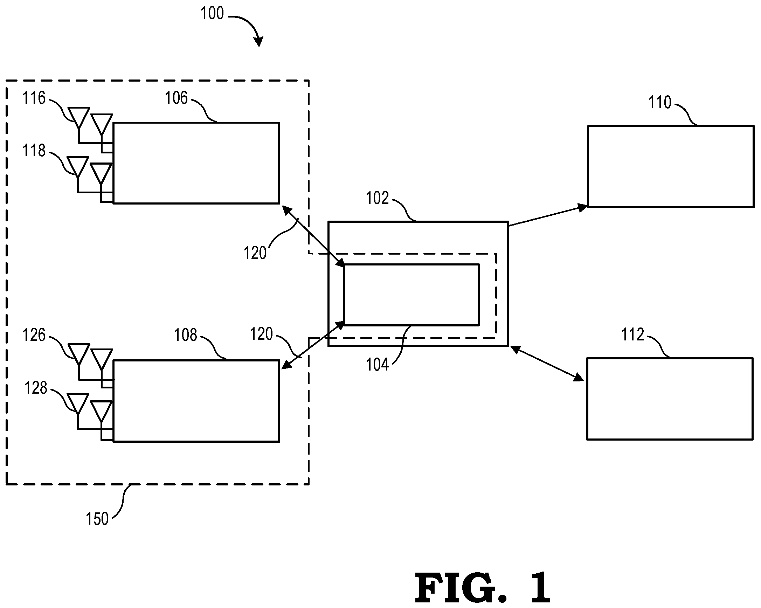

FIGs. 1-12 provide techniques for a radar system to update the measurement accuracy values of radar data measured at a radar sensor and provide these updated measurement accuracy values along with the respective radar data to an object tracking processing unit at a central radar processor. In this manner, the radar sensor provides parameters to implement a variable covariance matrix in the Kalman filter used by the object tracking processing unit during each step of the object tracking process. This increases the accuracy of the radar system's object tracking capabilities since the covariance matrix is updated at each step of the object tracking process.

To illustrate, a radar sensor includes a radar front end coupled to a plurality of antennas. The radar front end generates radar sequence signals to transmit from a transmission subset of the plurality of antennas. A reception subset of the plurality of antennas receives the reflections of the radar sequence signals after they reflect off of nearby objects. The radar front end performs initial signal processing (e.g., noise filtering, signal amplification, analog-to-digital conversion) of the received reflections of the radar sequence signals and forwards a corresponding digital signal to a digital processor at the radar sensor. The digital processor generates a plurality of radar data points based on the corresponding digital signal received from the radar front end. In some embodiments, the plurality of radar data points includes a range, a velocity, and/or an angle of arrival information for each of the received reflections of the radar sequence signals. In addition, for one or more respective radar data points of the plurality of radar data points, the digital processor calculates a data item indicative of a measurement accuracy for the respective radar data point. In some embodiments, the data item is a signal-to-noise ratio (SNR). In other embodiments, the data item is a covariance noise matrix based on the SNR and one or more radar sensor parameters. Examples of the radar sensor parameters include antenna configuration parameters (such as the number of transmission or reception antennas, the spacing between the transmission antennas, or the spacing between the reception antennas) and radar signal transmission parameters (such as radar sequence acquisition bandwidth, radar sequence chirp time, number of chirps per frame of the radar sequence). The radar sensor communicates the plurality of radar data points and the data item for each respective radar data point to an object tracking processor at a central radar processor. The object tracking processor utilizes the information received from the radar sensor to update the covariance matrix used by a Kalman filter in the next object tracking step of the object tracking process. Thus, the object tracking processor utilizes a variable covariance matrix that is updated at each step of the object tracking process. This improves the accuracy of the object tracking process compared to conventional techniques that utilize a fixed covariance matrix. In some scenarios, the variable covariance matrix techniques described herein provide a 2-3x improvement in accuracy over the conventional techniques.

FIG. 1 illustrates a device control system 100 in accordance with some embodiments. The device control system 100 is implemented, for example, in a vehicle or a robot and may be used to assist in autonomous driving functions or robotic control functions.

In some embodiments, the device control system 100 includes a radar system 150 including radar sensors 106, 108 and a central radar processor 104. In some cases, the central radar process 104 is included within an electronic control unit (ECU) 102. In some embodiments, the ECU 102 includes additional processing circuitry, e.g., a central processing unit (CPU), to perform various processing functions related to device control. The central radar processor 104 is coupled to radar sensors 106, 108 via interfaces 120. While two radar sensors 106, 108, are shown in FIG. 1, it is appreciated that this number is for clarity purposes and may be scalable to a larger (or smaller, i.e., one radar sensor) quantity depending on design considerations. In some embodiments, the radar sensors 106, 108 are located at different positions of a vehicle housing device control system 100. For example, one radar sensor 106 may be at the front end of the vehicle and the other radar sensor 108 may be at the rear end of the vehicle. In some embodiments, radar sensor 106 includes a plurality of antennas 116, 118. For example, a first subset of the plurality of antennas 116 includes transmission antennas and a second subset of the plurality of antennas 118 includes reception antennas. Similarly, in some embodiments for radar sensor 108, the plurality of antennas 126 are transmission antennas and the plurality of antennas 128 are reception antennas. In some embodiments, the plurality of antennas associated with each of radar sensors 106, 108 support multiple-input and multiple-output (MIMO) radar configurations. While two antennas are shown for each of the plurality of antennas 116, 118, 126, 128, it is understood that this is for clarity purposes of the ensuing explanation and this number may be scalable to larger quantities (e.g., three, four, or more antennas).

In some embodiments, the central radar processor 104 is implemented as a micro-controller unit (MCU) or other processing unit that is configured and arranged for radar signal processing tasks such as, but not limited to, object identification, computation of object distance, object velocity, object direction, and/or object tracking (collectively referred to as "radar information"). In some embodiments, the central radar processor 104 is additionally configured to generate control signals based on the radar information. The central radar processor 104 may, for example, be configured to generate calibration signals, receive data signals, receive sensor signals, generate frequency spectrum shaping signals (such as ramp generation in the case of frequency modulation continuous wave (FMCW) radar) and/or state machine signals for radio frequency (RF) circuit enablement sequences. In addition, the central radar processor 104 may be configured to program the radar sensors 106, 108 to operate in a coordinated fashion by transmitting MIMO waveforms for use in constructing a virtual aperture from a combination of the distributed apertures formed by the plurality of transmission and reception antennas shown in FIG. 1.

Each of the radar sensors 106, 108 includes a radar front end chip which is coupled to the respective pluralities of antennas to transmit radar signals (e.g., in the form of radar chirp sequences), receive reflected radar signals, and digitize these received radar signals for forwarding to the central radar processor 104 over the respective interface 120. The central radar processor 104 then performs radar processing tasks such as object tracking based on the digitized radar signals received from the radar sensors 106, 108 to provide radar information to the ECU 102. The ECU 102 can then use this radar information to control one or more actuators 110 such as a steering actuator, braking actuator, or throttle actuator to assist in driver-assistance or autonomous driving functions of a vehicle or to control other types of actuators for controlling the movement of a robot. In some embodiments, the ECU 102 displays the radar information or associated information via a user interface 112 such as a screen display, a speaker, or a light to alert a driver or user of objects detected by radar system 150.

In some embodiments, each of the radar sensors 106, 108 produce a plurality of radar data points based on radar signals received at the radar sensor reflected from one or more objects. In some embodiments, for one or more respective radar data points of the plurality of radar data points, the radar sensor calculates a data item indicative of a measurement accuracy for the respective radar data point. The data item, in some aspects, is a covariance matrix or a signal-to-noise ratio (SNR) value. The respective radar sensor 106, 108 forwards the plurality of radar data points along with each data item to a central radar processor 104 which performs higher level radar data processing based on the information received from the radar sensors 106, 108. In some embodiments, the central radar processor 104 includes an object tracking processing unit that performs object tracking of detected objects based on the plurality of radar data points and each data item. For example, in some embodiments, the object tracking processing unit executes an object tracking algorithm that utilizes a Kalman filter to track objects based on a combination of the information obtained from the radar sensors 106, 108 and pre-determined motion models stored in a memory component of the object tracking processing unit of the central radar processor 104. By including the data item along with the plurality of radar data points, the object tracking processing unit of the central radar processor 104 is able to update the covariance matrix at each step of the object tracking update process, thus providing improved accuracy over conventional radar systems that utilize a fixed covariance matrix.

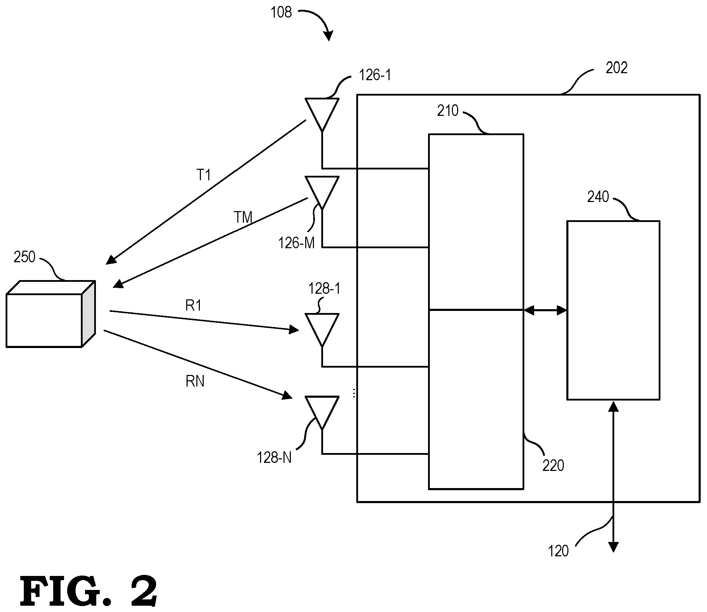

FIG. 2 illustrates a radar sensor 108 operating with a MIMO configuration in accordance with some embodiments. Although FIG. 2 refers to radar sensor 108, it is understood that the ensuing explanation similarly applies to radar sensor 106 or another radar sensor in a radar system such as the radar system 150 in FIG. 1.

In some embodiments, radar sensor 108 includes a radar front end chip 202 that includes radar transceiver circuitry (the combination of transmission (TX) circuitry 210 and reception (RX) circuitry 220) and a digital signal processor (DSP) 240. The TX circuitry 210 includes transmission components configured to transmit radar signals (e.g., radar chirp sequences in sequential frames) via transmission antennas 126-1 to 126-M. While two transmission antennas 126-1 to 126-M are shown (i.e., M= 2), it is appreciated that this number may be scalable to higher quantities based on the MIMO configuration to be implemented by the radar sensor 108. As shown, transmission antenna 126-1 transmits radar signal T1 and transmission antenna 126-M transmits radar signal TM. In some embodiments, radar signals T1 and TM are transmitted concurrently. In some embodiments, radar signals T1 and TM each include a series of chirps that are transmitted in sequence over a plurality of frames. For example, according to some radar schemes, the chirp sequences may include 512 chirps transmitted over 15 milliseconds (ms) in a 50 ms frame.

In some cases, the radar signals T1 and TM reflect off one or more objects such as object 250 and back in the direction of reception antennas 128-1 and 128-N as reflected radar signals R1 and RN. Reflected radar signal R1 may include components corresponding to the reflections of T1 and TM that are received at reception antenna 128-1 and reflected radar signal RM may include components corresponding to the reflections of T1 and TM received at reception antenna 128-M. While two reception antennas 128-1 to 128-M are shown (i.e., M=2), it is appreciated that this number may be scalable to higher quantities based on the MIMO scheme to be implemented by the radar sensor 108. After receiving reflected radar signals R1 and RN at reception antennas 128-1 and 128-M, respectively, the received radar signals are forwarded to RX circuitry 220 for further signal processing. In some embodiments, the RX circuitry 220 includes a plurality of receive chains corresponding to the number of reception antennas 128-1 and 128-M. Each of these receive chains performs signal conditioning and mixing operations (e.g., amplification, filtering) on the received radar signals prior to digitizing the radar signals to pass to the DSP 240. The DSP 240 includes various signal processing components to estimate radar sensor output values from the digitized signals corresponding to received radar signals R1 and RN. In some embodiments, these signal processing components include one or more of a range fast Fourier transform (FFT) processing unit to estimate a range (or distance to) a detected object based on the received radar signals, a Doppler FFT processing unit to estimate a Doppler effect of a detected object based on the received radar signals, a peak detector to measure peaks from the Doppler FFT processing unit to estimate a velocity of a detected object, and a direction of arrival (DOA) processing unit to estimate an angular direction of a detected object based on the received radar signals. In some embodiments, the signal processing components also include a covariance matrix generator to compute a covariance matrix based on radar sensor parameters and a measured SNR. Based on the estimated measurements from these signal processing components, the DSP 240 generates a plurality of radar data points (a "point cloud") to transmit to a central radar processor (not shown) over interface 120.

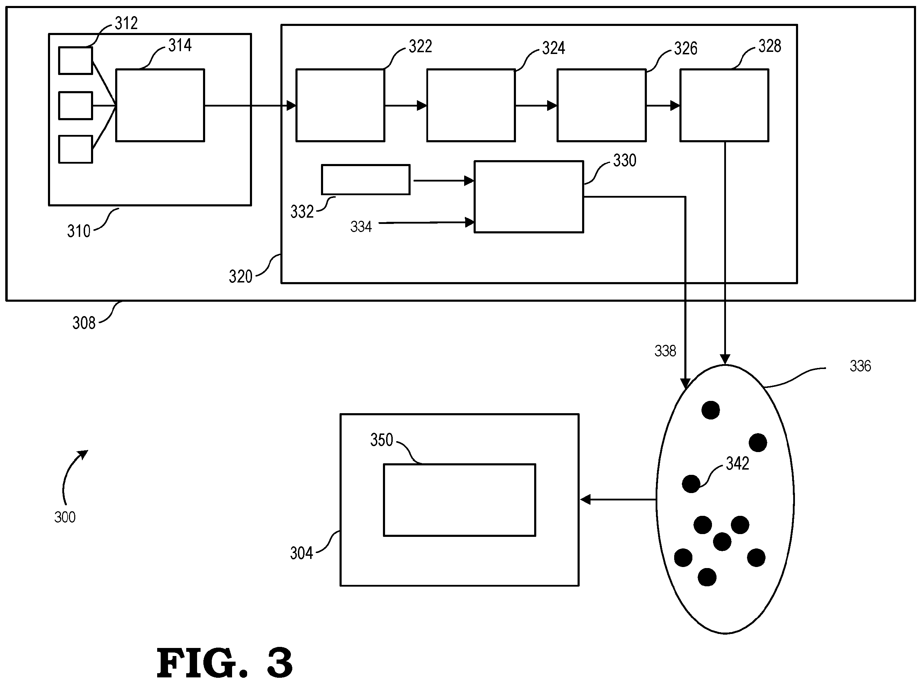

FIG. 3 shows an example of a radar system 300 including a radar sensor 308 and a central radar processor 304 in accordance with some embodiments. In some embodiments, radar sensor 308 corresponds to one of radar sensor 106 and radar sensor 108 illustrated FIG. 1 or radar sensor 108 illustrated in FIG. 2 and central radar processor 304 corresponds to central radar processor 104 illustrated in FIG. 1. Although one radar sensor 308 is shown for clarity purposes, it is understood that multiple radar sensors with a similar architecture and functionality as radar sensor 308 can be included in radar system 300.

The analog section 310 of the radar sensor 308 includes a plurality of antennas 312 (one marked for clarity) and a radio frequency (RF) front end 314. In some embodiments, the plurality of antennas 312 are configured in a uniform linear antenna array and each of the antennas are spaced half of a wavelength apart from one another with respect to the wavelength of the signals transmitted from the plurality of antennas 312. Three antennas 312 are shown by way of example in FIG. 3 for clarity purposes, but it is understood that this number is scalable to other quantities (e.g., four, eight, or more) depending on radar design considerations.

In some embodiments, the RF front end 314 includes transmit signal generation circuitry to generate a radar signal within a programmable frequency band at a programmable chirp rate and range. The radar chirp sequence is generated based on a local oscillator (LO) input and a chirp start trigger input, for example. In some cases, the chirp start trigger input is provided by the central radar processor 304 and in other cases, the chirp start trigger input is generated at the radar sensor 308 itself. Splitters and phase shifters (not shown) included at the RF front end 314 enable multiple transmitters to operate concurrently. In some embodiments, the transmission components in the RF front end 314 include other signal processing components such as digital-to-analog (DAC) converters, buffers, mixers, filters, or power amplifiers. The RF front end 314 also includes reception circuitry such as receive chains for one or more reception antennas in the plurality of antennas 312. Each receive chain in the RF front end 312 includes, for example, one or more of a low noise amplifier (LNA) to amplify a received radar signal and a mixer to mix the amplified signal with a signal generated by the transmit signal generation circuitry to generate an intermediate frequency (IF) signal. In some cases, the receive chain also includes a high-pass filter (HPF) that receives the resulting IF signal and removes unwanted lower frequencies from the signal. The receive chain, in some embodiments, further includes a gain amplifier to amplify the IF signal before forwarding it to a low-pass filter (LPF) to remove noise. The re-filtered signal is then fed to an analog-to-digital converter (ADC) to generate a digital signal that is communicated to the radar sensor's digital signal processor 320.

The digital signal processor 320 of the radar sensor 308 includes signal processing circuitry to process the digital signal received from the analog section 310 and generate a plurality of radar data points (i.e., "point cloud" 336) that is communicated to the central radar processor 304 (e.g., over an interface such as interface 120 shown in FIG. 1 and 2). In general, the digital signal processor 320 includes a combination of hardware and software to execute the functions defined herein. For example, in some embodiments, the digital signal processor 320 of the radar sensor 302 including a range Fast Fourier transform (FFT) circuit 322 to estimate a range (or distance) to reflection points in the digital signal received from the analog section 310. In some embodiments, the digital signal processor 320 includes a Doppler FFT circuit 324 and a peak detection circuit 326 to conduct Doppler velocity measurements from the range estimates (also referred to as range measurements) of the range FFT circuit 322. In some embodiments, the digital signal processor 320 includes a direction of arrival (DOA) circuit 328 to measure the angle of arrival of the radar signal reflections received at the plurality of antennas 312 in order to determine a direction of objects with respect to the radar sensor 308. In this manner, the digital signal processor 320 provides a set of radar data measurements in the form of a plurality of radar data points illustrated as the point cloud 336 in FIG. 3. Each radar data point 342 (only one labelled for clarity purposes) in the point cloud 336 includes information about one or more of a range to, a velocity of, or an angle to a point reflection based on the radar signals received at the plurality of antennas 312. This information is forwarded to the central radar processor 304 for higher level radar processing such as object detection and object tracking. In some embodiments, multiple radar data points 342 in the point cloud 336 are clustered together. That is, the digital signal processor 320 determines that two or more (i.e., a cluster) of the radar data points 342 belong to the same object and fuses these radar data points together into one data point representative of the whole cluster of radar data points.

In some aspects, in addition to the components described above, the digital signal processor 320 includes a covariance matrix generation circuit 330 to generate the covariance matrix per point in the radar data point cloud 338 based on inputs received from the SNR circuit 332 and information about the sensor parameters 334. Although illustrated as being in the digital signal processor 320, in some embodiments, the SNR circuit 332 is located in the analog section 310 of the radar sensor 308. The SNR circuit 332 estimates the SNR of the received radar signal reflections based in part on information known from the transmission of the radar signals. The sensor parameters 334 include one or more parameters of an antenna configuration of the plurality of antennas 312 and radar signal transmission parameters. Examples of antenna configuration parameters include the number of transmission antennas, the number of reception antennas, the location of the transmission antennas, the location of the reception antennas, the spacing between the transmission antennas, and the spacing between the reception antennas. Examples of radar signal transmission parameters include the radar sequence acquisition bandwidth frequency, the radar sequence chirp time, and the number of chirps per radar chirp sequence of the transmitted radar sequence signals. Since the digital signal processor 320 and the analog section 310 are located on the same radar sensor 308, information about the sensor parameters 334 can be stored at a memory component in the digital signal processor 320 to facilitate the generation of the respective covariance matrices by the covariance matrix generation circuit 330. After receiving the SNR data from the SNR circuit 332 and the radar sensor parameters 334 as inputs, the covariance matrix generator 330 generates a covariance matrix 338 (e.g., such as $R_k$ represented below in Equation (1)) for each radar data point 342 in the point cloud 336. The radar sensor 308 then transmits each covariance matrix 338 along with its respective radar data point 342 in the point cloud 336 to the object tracking processor 350 in the central radar processor 304 for the object tracking update process. In some embodiments, in cases where the digital signal processor determines that multiple radar data points (i.e., a cluster of radar data points) belong to the same object and fuses together into one data point, their corresponding covariance matrices 338 are fused together as well into one covariance matrix representative of the whole cluster.

As previously discussed, the covariance matrix includes information about the uncertainty (or measurement accuracy) in each of the measurement values provided by the radar sensor 308. For example, each of the range measurement, the velocity measurement, and the angle measurement generated by components 322 to 328 have corresponding measurement accuracy values that can be represented in a covariance matrix. In some embodiments, the covariance matrix ($R_k$) for a time step k can be defined according to the following equation:

$$R_k = \begin{bmatrix} \sigma_R^2 & 0 & 0 \\ 0 & \sigma_v^2 & 0 \\ 0 & 0 & \sigma_{AZ}^2 \end{bmatrix} \qquad \text{Equation (1)}$$

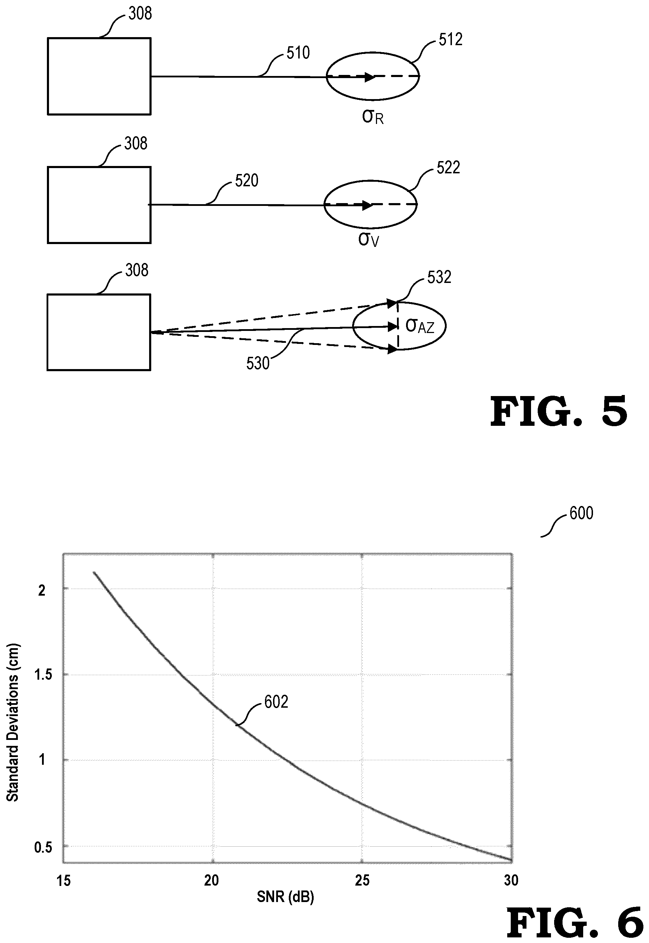

where $\sigma_R^2$ is the variance indicative of a measurement accuracy value for the range (R) measurement, $\sigma_v^2$ is the variance indicative of a measurement accuracy value for the velocity (v) measurement, and $\sigma_{AZ}^2$ is the variance indicative of a measurement accuracy value for the azimuth (AZ) angle measurement of the direction of arrival (DOA). In some embodiments, the covariance matrix generator 330 employs a Cramer-Rao lower bound algorithm to estimate each of $\sigma_R^2$, $\sigma_v^2$, and $\sigma_{AZ}^2$ as a function of the SNR 332 and the one or more sensor parameters 334 for each radar data point 342 in the point cloud 336. Each of these variance values is given as a sigma ($\sigma$) value (standard deviation) that is illustrated in FIGs. 5-8 and further discussed below.

FIG. 5 shows three example diagrams illustrating the range standard deviation ($\sigma_R$), the velocity standard deviation ($\sigma_v$), and the azimuth angle standard deviation ($\sigma_{AZ}$) for radar sensor 308. These standard deviation values are indicative of a measurement accuracy of the radar sensor with respect to each of the corresponding measurements and, in some embodiments, are calculated based on the Cramer-Rao lower bound equations provided below in Equations (2) to (4) and graphically illustrated in FIGs. 6-8.

The range standard deviation, $\sigma_R$, is illustrated in FIG. 5 as the major axis of elliptical area 512. That is, based on a range measurement (indicated by solid line 510) of a received radar reflection point calculated at radar sensor 308, the range may be located anywhere along the major axis of the elliptical area 512. The size of elliptical area 512 changes as a function of the SNR and the radar sensor parameters such as radar acquisition bandwidth. For example, a higher SNR leads to a reduction in the range standard deviation, $\sigma_R$, due to better signal strength, thereby leading to higher accuracy in the range measurement calculations (i.e., the size of the elliptical area 512 is reduced). In some embodiments, the Cramer-Rao lower bound is calculated using the inverse of the second derivative of the likelihood function indicating how likely the detected object will fall within a range measurement with a range of deviation. In some embodiments, the range standard deviation, $\sigma_R$, for any given range measurement is described according to the following Cramer-Rao lower bound equation:

$$\sigma_R = \sqrt{\frac{3c^2}{8\pi^2 \cdot B^2 \cdot SNR}} \qquad \text{Equation (2)}$$

where $\sigma_R$ is calculated in meters, c is the speed of light, B is the acquisition bandwith in hertz (Hz), and SNR is the signal-to-noise ratio for a particular target. FIG. 6 shows a graph 600 illustrating the relationship between SNR and variance (in cm) of range measurements of a radar sensor such as radar sensor 308. In graph 600, the acquisition bandwidth, B, is 440 MHz. As illustrated by line 602, the range standard deviation ($\sigma_R$, mapped on the y-axis) decreases as the SNR (mapped on the x-axis) increases.

The velocity standard deviation, $\sigma_V$, is illustrated in FIG. 5 as the major axis of elliptical area 522. That is, based on a velocity measurement (indicated by solid line 520) of a received radar reflection point calculated at radar sensor 308, the velocity may fall anywhere along the major axis of elliptical area 522. The size of elliptical area 522 changes as a function of SNR and radar sensor parameters such as the radar chirp wavelength, number of chirps in the radar chirp sequences, and the chirp duration of the radar chirp sequences. For example, a higher SNR leads to a reduction in the velocity standard deviation, $\sigma_V$, represented by elliptical area 522 due to better signal strength, thereby leading to higher accuracy in the velocity measurement calculations. In some embodiments, the Cramer-Rao lower bound is calculated using the inverse of the second derivative of the likelihood function indicating how likely the detected object will fall within a velocity measurement with a range of deviation. In some embodiments, the velocity standard deviation, $\sigma_V$, for any given velocity measurement is described according to the following Cramer-Rao lower bound equation:

$$\sigma_v = \frac{\lambda}{2} \sqrt{\frac{6 \cdot \left(1/N_{chirp} \cdot T_{chirp}\right)^2}{(2\pi)^2 \cdot N_{chirp} \cdot SNR}} \qquad \text{Equation (3)}$$

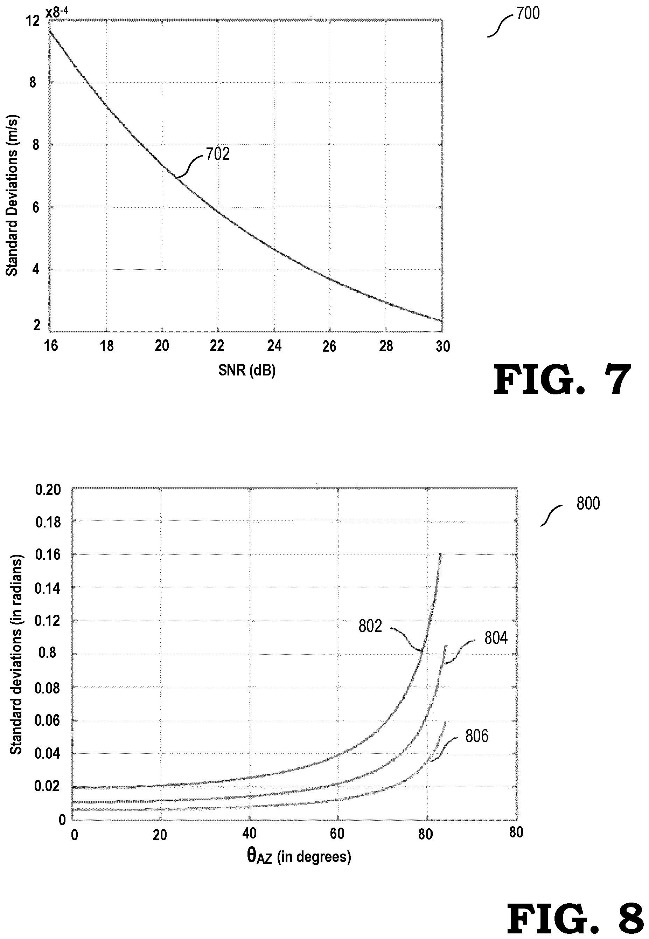

where $\lambda$ is the radar chirp wavelength, $N_{chirp}$ and $T_{chirp}$ are the number of chirps and the chirp duration of the radar chirp sequences, respectively, and SNR is the signal-to-noise ratio for a particular target. FIG. 7 shows a graph 700 illustrating the relationship between SNR and variance (in m/s) of a velocity measurement of a radar sensor such as radar sensor 308. Graph 700 is plotted for a corner radar application where $T_{chirp}$ = 26 microseconds ($\mu$s) and $N_{chirp}$ is 256. As illustrated by line 702, the velocity standard deviation ($\sigma_V$, mapped on the y-axis) decreases as the SNR (mapped on the x-axis) increases.

The azimuth (AZ) angle standard deviation, $\sigma_{AZ}$, is illustrated in FIG. 5 as the minor axis of elliptical area 532. That is, based on an AZ angle measurement (indicated by solid line 530) of a received radar reflection point calculated at radar sensor 308, the AZ angle may be positioned anywhere along the minor axis of elliptical area 532. The size of elliptical area 532 changes as a function of SNR and radar sensor parameters such as the number of reception antennas. For example, a higher SNR leads to a reduction in the AZ angle standard deviation, $\sigma_{AZ}$, represented by elliptical area 532 due to better signal strength, thereby leading to higher accuracy in the velocity measurement calculations. Similarly, a higher number of reception antennas also leads to a reduction in the AZ angle standard deviation, $\sigma_{AZ}$. In some embodiments, the Cramer-Rao lower bound for the direction of arrival (such as AZ angle) is based on part on the antenna configuration of the plurality of reception antennas of the radar sensor 308. For example, in some cases, the antenna configuration includes a uniform linear antenna array with an antenna spacing at half the wavelength of the wavelength of the transmitted radar signals. In some embodiments, the AZ angle standard deviation, $\sigma_{AZ}$, for any given AZ angle measurement is described according to the following Cramer-Rao lower bound equation:

Equation (4)

$$\sigma_{AZ} = \frac{1}{\pi \cdot \cos\theta_{az}} \cdot \sqrt{\frac{1}{SNR}} \cdot \sqrt{\frac{6}{M \cdot (M^2 - 1)}}$$

where $\theta_{AZ}$ is AZ angle of the point reflection for which the covariance is calculated, SNR is the signal-to-noise ratio for a particular target, and M is the number of reception antennas times the number of transmit antennas in a uniform linear antenna array configuration where the reception antennas spacing is half the wavelength ($\lambda$) of the transmitted radar signals and the transmission antennas spacing is twice the wavelength ($\lambda$) of the transmitted radar signals. For example, a configuration with 4 transmission antennas and 4 reception antennas spaced apart in this manner leads to a combined uniform linear antenna array with 16 virtual antennas, or M = 16. FIG. 8 shows a graph 800 illustrating the relationship between the AZ angle direction of arrival (DOA) from a target in degrees on the x-axis and the standard deviation (in radians) on the y-axis. Line 802 represents an SNR of 5 dB, line 804 represents an SNR of 10 dB, and line 806 represents an SNR of 15 dB. As illustrated in graph 800, a higher SNR reduces the uncertainty in the AZ angle DOA estimation. For example, for any given DOA along the x-axis, line 806 representing an SNR of 15 dB has a lower standard deviation than line 804 representing an SNR of 10 dB. Also shown in graph 800 is the relationship between the measured AZ angle ($\theta_{AZ}$) and the standard deviation. As shown in graph 800, an increase in the AZ angle ($\theta_{AZ}$) of the point reflection results in higher standard deviation, $\sigma_{AZ}$.

Referring back to FIG. 3, the covariance matrix generator 330 thus executes operations according to a Cramer-Rao lower bound algorithm as described according to Equations (2) to (4) and illustrated in FIGs. 5-7 to determine the range variance ( $\sigma_R^2$ ), velocity variance ( $\sigma_v^2$ ), and azimuth angle variance ( $\sigma_{AZ}^2$ ) of the covariance matrix ($R_k$). In the embodiment shown in FIG. 3, these calculations are implemented by software being executed by processing circuitry at the covariance matrix generator 308 in the radar sensor 308. The radar sensor 308 then provides the respective covariance values, along with the point cloud 336, to hardware at the object tracking processor 350 that is executing object tracking algorithm software. While the embodiment illustrated in FIG. 3 slightly increases the bandwidth of communication between the radar sensor 308 and the central radar processor 304, this embodiment has the advantage that the radar sensor parameters do not need to be input at the central radar processor 304 to calculate the covariance values in each update to the covariance matrix. That is, the calculation of the covariance values (and therefore, the generation of the covariance matrix) is consolidated at the radar sensor 308, thus allowing for increased radar sensor compatibility with different types of central radar processors (e.g., central radar processors from different manufacturers).

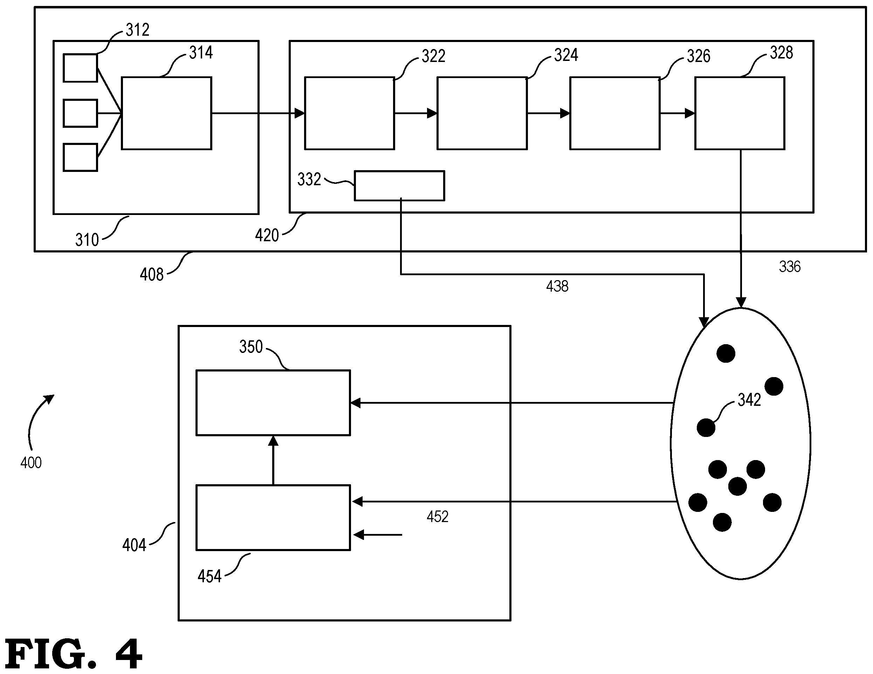

FIG. 4 shows another example of a radar system 400 including a radar sensor 408 and a central radar processor 404 in accordance with some embodiments. In some aspects, radar system 400 is similar to the radar system 300 shown in FIG. 3 with a difference being that the covariance matrix generator 454 in radar system 400 is located at the central radar processor 404 as opposed to being located at the radar sensor 308 as shown in FIG. 3. As such, the data bandwidth between the radar sensor and the central radar processor is reduced since the data item includes an additional single data point (the SNR 438 from SNR circuit 332) that is added per radar point of the plurality of radar data points in the point cloud 336 as opposed to a data item with three additional data points (i.e., the range, velocity, and angle covariances of the covariance matrix 338) that is added per radar point of the plurality of radar data points in the point cloud 336 shown in FIG. 3. This comes with the trade-off that the sensor parameters 452 need to be communicated to the central radar processor 404, which may reduce compatibility of the radar sensor 408 with different types of central radar processors.

In some embodiments, the point cloud 336 communicated from the radar sensor 408 in radar system 400 includes the same information as the point cloud 336 communicated from radar sensor 308 in radar system 300. That is, the point cloud 336 (i.e., the plurality of radar data points) includes information about one or more of a range to, a velocity of, and an angle to a point reflection based on the radar signals received at the plurality of antennas 312. However, in the embodiment illustrated in FIG. 4, the covariance matrix calculation is shifted to the covariance matric generator 454 in the central radar processor 404. As such, the covariance matrix generator 454 executes similar operations as discussed for covariance matrix generator 330 in FIG. 3 in combination with FIGs. 5-8.

In the case of either embodiment shown in FIG. 3 or in FIG. 4, the object tracking processor 350 receives the plurality of radar data points in the point cloud 336 and a covariance matrix per radar data point of the plurality of radar data points in the point cloud 336. For example, in some aspects, the object tracking processor 350 may therefore utilize the plurality of radar data points along with the corresponding covariance matrix per radar data point in the object tracking process. In other words, the covariance matrix is updated for each set of plurality of radar data points per radar data frame of the object tracking process. Thus, the object tracking accuracy of the object tracking processor 350 is improved compared to conventional object tracking processors that utilize a fixed covariance matrix.

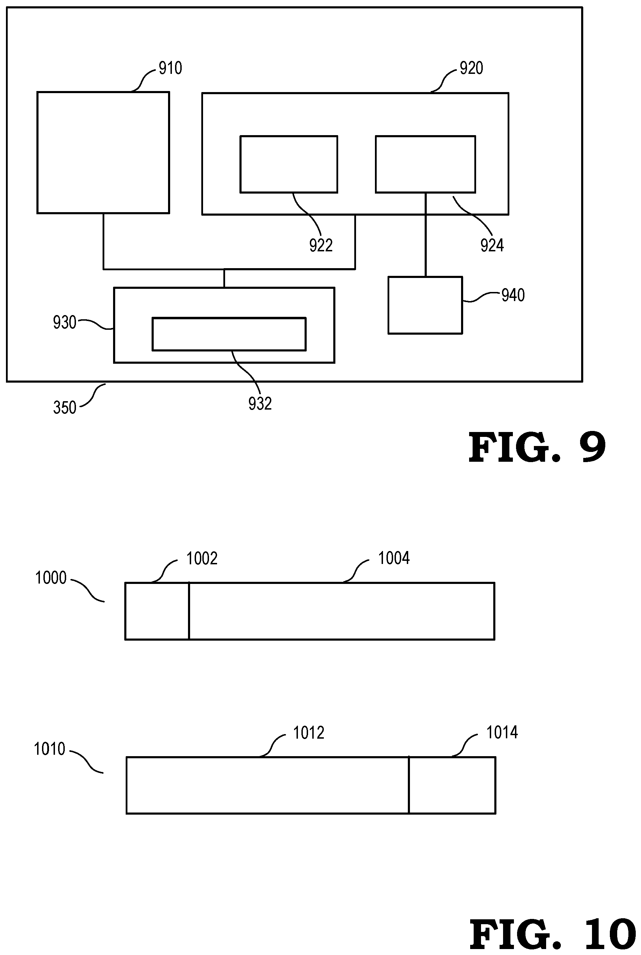

FIG. 9 shows an object tracking processor's 350 functional components in accordance with some aspects. The object tracking processor 350 is configured to track detected objects based on a combination of a motion model predictor 912 and radar measurement data 914 received from one or more radar sensors such as radar sensor 308 and 408 in FIGs. 3 and 4, respectively.

In some embodiments, the motion model predictor 910 is a combination of motion model software and corresponding processing circuitry to execute operations of the motion model software for purposes of tracking one or more objects detected by the radar sensors. In some embodiments, the radar measurement data component 920 is a combination of memory storage and controllers to receive and store radar measurement data based on radar data information received from the radar sensors. This radar measurement data includes, for example, the point cloud 922 (or the plurality of radar data points) and the covariance matrix 924 (calculated either at the radar sensor as shown in FIG. 3 or at the central radar processor as shown in FIG. 4). In some cases, the motion model predictor 910 is subject to uncertainties (variance) due to process noise and the radar data 914 is subject to uncertainties (variance) due to measurement noise. Accordingly, in order to determine which optimal estimate of the object's track, the object tracking update component 930 of the object tracking processor 350 employs a Kalman filter 932 to determine the respective weights of the contribution from the motion model predictor 910 and the contribution from the radar measurement data 920 in the object tracking update process.

The Kalman filter 932 implements a two-step process that uses a motion model estimate from the motion model predictor 910 and an estimate based on the radar measurement data 920 to determine an optimal estimate for the detected object's location or position at a next point in time along a track or path. That is, the Kalman filter provides an optimal estimate of the object's position at a point in time (i.e., corresponding to the object's track) by minimizing variance in view of the process noise in the motion model and in view of measurement noise in the radar measurement data. The initial step of the Kalman filter is a prediction step that uses the motion model to calculate an initial estimate of an object's position at a certain point in time and a corresponding predicted process noise covariance. The second step (or the update step) of the Kalman filter uses the initial estimate from the initial step (or a previous update step) and updates the initial estimate to determine the updated estimate of the object's position at a next point in time along with a corresponding updated error covariance. The Kalman gain is calculated so that it minimizes this corresponding updated error covariance to provide the most accurate updated position. In some aspects, the Kalman gain is represented by the following equation:

$$K_k = P_{k|k-1}H_k^T\left(H_k P_{k|k-1} H_k^T + R_k\right)^{-1}$$

Equation (5)

where $K_k$ is the Kalman gain for time step k, $P_{k|k-1}$ is the predicted process noise covariance from the initial estimate, $H_k$ is the observation model for time step k, and $R_k$ is the covariance matrix. Thus, the calculation of the Kalman gain is in part dependent on the covariance matrix discussed herein. Accordingly, by providing an updated covariance matrix for each set of radar measurement data, the Kalman gain used in the object tracking process is more accurately determined for a given set of radar measurement data. Thus, the object tracking accuracy is improved.

An example of the effect of the Kalman gain is illustrated in FIG. 10. By determining the parameters to minimize the corresponding updated error covariance, the Kalman gain ($K_k$) determines how heavily the radar measurement data and the motion model estimate contributes to the calculation of the updated position or track of the detected object in the object tracking process. For example, in a first case 1000, if the covariance matrix is small (i.e., indicating low measurement noise in the radar measurement data), the radar measurement data 1004 contributes more heavily to the calculation of the object tracking update than the motion model predictor 1002 does. On the other hand, in a second case 1010, if the covariance matrix is large (i.e., indicating high measurement noise), the motion model predictor 1012 contributes more heavily to the calculation of the object tracking update than the radar measurement data 1014 does.

As discussed above, the covariance matrix generation techniques described herein provide an accurate covariance estimation for the radar measurement data. In some aspects, there is a trade-off between relying more heavily on the radar measurement data versus relying more heavily on the prediction of the motion model in the calculation of the Kalman gain at the Kalman filter 932. For example, relying on the radar measurement data too heavily may lead to losing the track of the detected object or lead to other stability issues in tracking. To account for such scenarios, in some embodiments, the object tracking processor 350 applies a scaling factor 940 to the covariance matrix 924 per time step k such that the effect of the covariance matrix 924 is reduced in each step of the Kalman filter 932 calculations of the object tracking update 930. Introducing the scaling factor 940 relaxes the scenarios in which the effect of the radar measurement data is greatly increased. This in turn increases the object tracking process stability by allowing for a lower lock-on duration during the object tracking process. In some embodiments, the scaling factor 940 is a constant value such as 1, 5, or 10. The scaling factor ($\alpha$) is applied to the covariance matrix calculated per time step k such that $R_{\alpha,k} = \alpha R_k$, where $R_k$ is the covariance matrix provided in Equation (1). For example, in some embodiments, applying a scaling factor of 10 to the covariance matrix achieves an optimal trade-off between improving tracking accuracy and maintaining stability by enabling a lower lock-on duration during radar tracking.

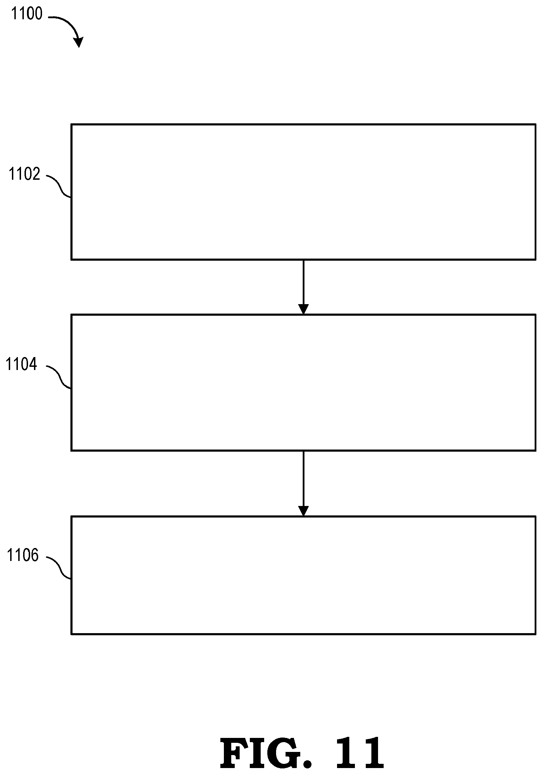

FIG. 11 shows a flowchart 1100 describing a method according to some embodiments. In some embodiments, the method shown in flowchart 1100 is performed at a radar sensor, such as radar sensor 308 in FIG. 3 or radar sensor 408 in FIG. 4, in order to enable the use of a variable covariance matrix in the Kalman filter computations of an object tracking process.

At 1102, the radar sensor produces a plurality of radar data points based on radar reflections received at the radar sensor. For example, the plurality of radar data points may be produced as a point cloud and include radar sensor output measurements including a range measurement, a velocity measurement, and an azimuth angle measurement for each of one or more points obtained from the radar reflections received at the radar sensor.

At 1104, the radar sensor computes a data item indicative of a measurement accuracy for each respective radar data point of the plurality of radar data points. In some embodiments, the data item is an SNR. In other embodiments, the data item is a covariance matrix including covariance values for each of the radar sensor output measurements.

At 1106, the radar sensor transmits the plurality of radar data points and the data item for each respective radar data point to a central radar processor. The central radar processor utilizes the information provided by the radar sensor for tracking one or more detected objects.

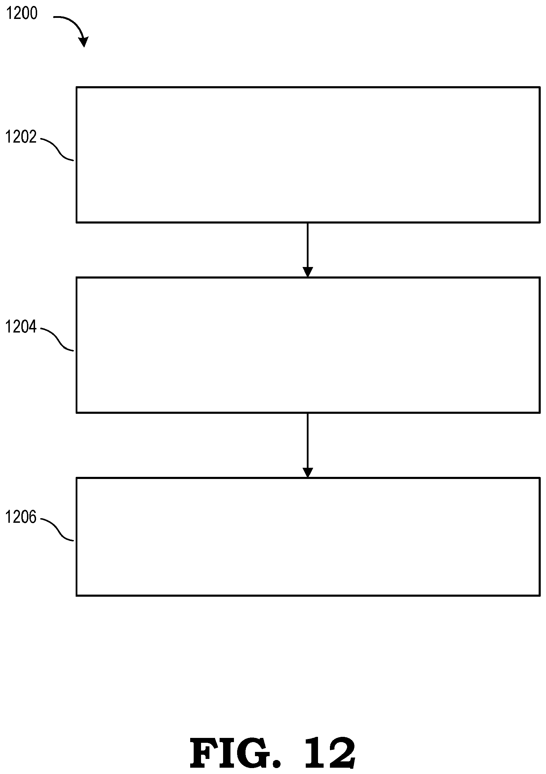

FIG. 12 shows a flowchart 1200 describing a method according to some embodiments. In some embodiments, the method shown in flowchart 1200 is performed at an object tracking processor, such as object tracking processor 350 in FIG. 3, 4, or 9, of a central radar processor to use a variable covariance matrix in the Kalman filter computations of an object tracking process.

At 1202 and 1204, the object tracking processor receives a plurality of radar data points and a covariance matrix for one or more radar data points of the plurality of radar data points, respectively. In some embodiments, the covariance matrix is generated at the radar sensor, such as shown in FIG. 3. In other embodiments, the covariance matrix is generated at the central radar processor, such as shown in FIG. 4. At 1206, the object tracking processor utilizes the covariance matrix in the next step (e.g., in the next update) of the object tracking process.

In some embodiments, the various illustrative logical blocks, modules, circuits, algorithm, and method blocks described in connection with the techniques discussed herein may be implemented as hardware, software, or combinations of both. To illustrate this interchangeability of hardware and software, various illustrative components, blocks, modules, circuits, and blocks have been described above generally in terms of their functionality. Whether such functionality is implemented as hardware or software depends upon the particular application and design constraints imposed on the overall system. The hardware used to implement the various illustrative logics, logical blocks, modules, and circuits described in connection with the techniques discussed herein may be implemented or performed with a general purpose processor, a digital signal processor (DSP), an application-specific integrated circuit (ASIC), a field-programmable gate array (FPGA) or other programmable logic device, discrete gate or transistor logic, discrete hardware components, or any combination thereof designed to perform the functions described herein. A general-purpose processor may be a microprocessor, or, in the alternative, the processor may be any conventional processor, controller, microcontroller, or state machine. A processor or processing unit may also be implemented as a combination of computing devices, e.g., a combination of a DSP and a microprocessor, a plurality of microprocessors, one or more microprocessors in conjunction with a DSP core, or any other such configuration. Alternatively, some blocks or methods may be performed by circuitry that is specific to a given function.

In some embodiments, certain aspects of the techniques described above may be implemented by one or more processors of a processing system executing software. The software includes one or more sets of executable instructions stored or otherwise tangibly embodied on a (non-transitory) computer readable storage medium. The software can include the instructions and certain data that, when executed by the one or more processors, manipulate the one or more processors to perform one or more aspects of the techniques described above. The executable instructions stored on the non-transitory computer readable storage medium may be in source code, assembly language code, object code, or other instruction format that is interpreted or otherwise executable by one or more processors.

A computer readable storage medium may include any storage medium, or combination of storage media, accessible by a computer system during use to provide instructions and/or data to the computer system. Such storage media can include, but is not limited to, optical media (e.g., compact disc (CD), digital versatile disc (DVD), Blu-Ray disc), magnetic media (e.g., floppy disc, magnetic tape, or magnetic hard drive), volatile memory (e.g., random access memory (RAM) or cache), non-volatile memory (e.g., read-only memory (ROM) or Flash memory), or microelectromechanical systems (MEMS)-based storage media. The computer readable storage medium may be embedded in the computing system (e.g., system RAM or ROM), fixedly attached to the computing system (e.g., a magnetic hard drive), removably attached to the computing system (e.g., an optical disc or Universal Serial Bus (USB)-based Flash memory) or coupled to the computer system via a wired or wireless network (e.g., network accessible storage (NAS)).

# EP 4 455 727 B1

**Claims**

1. A radar sensor (108) comprising:

   a plurality of antennas (128-1, 128-N) to receive radar signals (R1, RN) reflected off of one or more objects (250);
   a processor (244) coupled to the plurality of antennas, the processor configured to:

   produce a plurality of radar data points based on the received radar signals;
   for one or more respective radar data points of the plurality of radar data points, calculate a data item indicative of a measurement accuracy for the respective radar data point; and
   generate a signal for transmission to a central radar processor for object tracking, the signal comprising the plurality of radar data points and the data item for each respective radar data point;

   wherein the data item is a covariance matrix, and the processor calculates the covariance matrix for each respective radar data point utilizing a plurality of radar parameters as inputs,
   wherein the plurality of radar parameters comprises a signal-to-noise ratio, SNR, of each respective radar data point in the plurality of radar data points, and one or more of:
   configuration information of a plurality of antennas coupled to the radar sensor, a radar acquisition bandwidth, a radar sequence chirp time, a radar sequence chirp frequency, or a number of chirps per frame in a radar sequence.

2. The radar sensor of the preceding claim, wherein the covariance matrix comprises a plurality of uncertainties in measurement values for each of a plurality of radar sensor outputs corresponding to each respective radar data point, wherein the plurality of radar sensor outputs comprises a range estimate, a velocity estimate, or an angle estimate.

3. A radar system (300) comprising:

   a radar sensor (308) according to any one of the preceding claims; and
   a central radar processor (304) configured to receive said generated signal and track the one or more objects (250) based on the plurality of radar data points and the data item for each respective radar data point.

4. The radar system of claim 3, wherein the central radar processor is configured to receive one or more radar sensor parameters from the radar sensor.

5. The radar system of claim 4, wherein the central radar processor is configured to calculate a covariance matrix for each respective radar data point utilizing the SNR for each radar data point and the one or more radar sensor parameters as inputs.

6. A method (1100) comprising:

   producing (1102), at a radar sensor (108), a plurality of radar data points based on radar signal reflections (R1, RN) received at the radar sensor;
   for one or more respective radar data points of the plurality of radar data points, calculating (1104), at the radar sensor, a covariance matrix for each respective radar data point utilizing one or more radar parameters as inputs, wherein the covariance matrix being indicative of a measurement accuracy corresponding to the respective radar data point, and wherein the one or more radar parameters comprises a signal-to-noise ratio, SNR, of each respective radar data point in the plurality of radar data points, and one or more of: configuration information of a plurality of antennas coupled to the radar sensor, a radar acquisition bandwidth, a radar sequence chirp time, a radar sequence chirp frequency, or a number of chirps per frame in a radar sequence;
   and transmitting (1106), by the radar sensor, the plurality of radar data points and the calculated covariance matrix for each respective radar data point to a central radar processor (304) for object tracking.

7. The method of the preceding claim 6, wherein the covariance matrix comprises a plurality of uncertainties in measurement values corresponding to each of a plurality of radar sensor outputs for each respective radar data point.

8. The method of any one of the preceding claims 6 to 7, wherein the plurality of radar sensor outputs comprises one or more of a range estimate, a velocity estimate, or an angle estimate.

9. The method of any one of the preceding claims 6 to 8, further comprising providing one or more radar sensor parameters to the central radar processor.

**Patentansprüche**

1. Radarsensor (108), umfassend:

   mehrere Antennen (128-1, 128-N) zum Empfangen von Radarsignalen (R1, RN), die von einem oder mehreren Objekten (250) reflektiert werden;
   einen mit den mehreren Antennen gekoppelten Prozessor (244), wobei der Prozessor ausgelegt ist zum Produzieren mehrerer Radardatenpunkte auf der Basis der empfangenen Radarsignale;
   für einen oder mehrere jeweilige Radardatenpunkte der mehreren Radardatenpunkte Berechnen eines Datenpostens, der eine Messgenauigkeit für den jeweiligen Radardatenpunkt angibt; und
   Erzeugen eines Signals zur Übertragung zu einem zentralen Radarprozessor zur Objektverfolgung, wobei das Signal die mehreren Radardatenpunkte und den Datenposten für jeden jeweiligen Radardatenpunkt umfasst;
   wobei der Datenposten eine Kovarianzmatrix ist und der Prozessor die Kovarianzmatrix für jeden jeweiligen Radardatenpunkt unter Verwendung mehrerer Radarparameter als Eingaben berechnet,
   wobei die mehreren Radarparameter einen Rauschabstand SNR jedes jeweiligen Radardatenpunkts der mehreren Radardatenpunkte und eines oder mehrere von Folgendem umfasst:
   Konfigurationsinformationen mehrerer mit dem Radarsensor gekoppelter Antennen, eine Radarerfassungsbandbreite, eine Radarsequenz-Chirp-Zeit, eine Radarsequenz-Chirp-Frequenz oder eine Anzahl von Chirps pro Rahmen in einer Radarsequenz.

2. Radarsensor nach dem vorhergehenden Anspruch, wobei die Kovarianzmatrix mehrere Unbestimmtheiten von Messwerten für jede von mehreren Radarsensorausgaben, die jedem jeweiligen Radardatenpunkt entsprechen, umfasst, wobei die mehreren Radarsensorausgaben eine Entfernungsschätzung, eine Geschwindigkeitsschätzung oder eine Winkelschätzung umfassen.

3. Radarsystem (300), umfassend:

   einen Radarsensor (308) nach einem der vorhergehenden Ansprüche; und
   einen zentralen Radarprozessor (304), ausgelegt zum Empfangen des erzeugten Signals und Verfolgen des einen oder der mehreren Objekte (250) auf der Basis der mehreren Radardatenpunkte und des Datenpostens für jeden jeweiligen Radardatenpunkt.

4. Radarsystem nach Anspruch 3, wobei der zentrale Radarprozessor ausgelegt ist zum Empfangen eines oder mehrerer Radarsensorparameter von dem Radarsensor.

5. Radarsystem nach Anspruch 4, wobei der zentrale Radarprozessor ausgelegt ist zum Berechnen einer Kovarianzmatrix für jeden jeweiligen Radardatenpunkt unter Verwendung des SNR für jeden Radardatenpunkt und des einen oder der mehreren Radarsensorparameter als Eingaben.

6. Verfahren (1100), umfassend:

   Produzieren (1102) mehrerer Radardatenpunkte in einem Radarsensor (108) auf der Basis von in dem Radarsensor empfangenen Radarsignalreflexionen (R1, RN);
   für einen oder mehrere jeweilige Radardatenpunkte der mehreren Radardatenpunkte Berechnen (1104) einer Kovarianzmatrix für jeden jeweiligen Radardatenpunkt in dem Radarsensensor unter Verwendung eines oder mehrerer Radarparameter als Eingaben, wobei die Kovarianzmatrix eine dem jeweiligen Radardatenpunkt entsprechende Messgenauigkeit angibt und wobei der eine oder die mehreren Radarparameter einen Rauschabstand SNR jedes jeweiligen Radardatenpunkts der mehreren Radardatenpunkte und eines oder mehrere von Folgendem umfassen: Konfigurationsinformationen von mehreren mit dem Radarsensor gekoppelten Antennen, eine Radarerfassungsbandbreite, eine Radarsequenz-Chirp-Zeit, eine Radarsequenz-Chirp-Frequenz oder eine Anzahl von Chirps pro Rahmen in einer Radarsequenz; und
   Übertragen (1106) der mehreren Radardatenpunkte und der berechneten Kovarianzmatrix für jeden jeweiligen Radardatenpunkt durch den Radarsensor zu einem zentralen Radarprozessor (304) zur Objektverfolgung.

7. Verfahren nach dem vorhergehenden Anspruch 6, wobei die Kovarianzmatrix mehrere Unbestimmtheiten von Messwerten, die jedem von mehreren Radarsensorausgaben für jeden jeweiligen Radardatenpunkt entsprechen, umfasst.

8. Verfahren nach einem der vorhergehenden Ansprüche 6 bis 7, wobei die mehreren Radarsensorausgaben eine Entfernungsschätzung, eine Geschwindigkeitsschätzung und/oder eine Winkelschätzung umfassen.

9. Verfahren nach einem der vorhergehenden Ansprüche 6 bis 8, das ferner Bereitstellen eines oder mehrerer Radarsensorparameter für den zentralen Radarprozessor umfasst.

**Revendications**

1. Capteur radar (108) comprenant :

   une pluralité d'antennes (128-1, 128-N) conçues pour recevoir des signaux radar (R1, RN) réfléchis par un ou plusieurs objets (250) ;
   un processeur (244) couplé à la pluralité d'antennes, le processeur étant configuré pour :

   produire une pluralité de points de données radar à partir des signaux radar reçus ;
   pour un ou plusieurs points de données radar respectifs de la pluralité de points de données radar, calculer un élément de données indiquant une précision de mesure pour le point de données radar respectif ; et
   générer un signal destiné à être transmis à un processeur radar central pour la poursuite d'objets, le signal comprenant la pluralité de points de données radar et l'élément de données pour chaque point de données radar respectif ;
   dans lequel l'élément de données est une matrice de covariance, et le processeur calcule la matrice de covariance pour chaque point de données radar respectif en utilisant en entrée une pluralité de paramètres radar, dans lequel la pluralité de paramètres radar comprend un rapport signal/bruit, noté SNR, de chaque point de données radar respectif dans la pluralité de points de données radar, et au moins un des éléments suivants :
   des informations de configuration d'une pluralité d'antennes couplées au capteur radar, une bande passante d'acquisition radar, une durée de chirp de séquence radar, une fréquence de chirp de séquence radar, ou un nombre de chirps par trame dans une séquence radar.

2. Capteur radar selon la revendication précédente, dans lequel la matrice de covariance comprend une pluralité d'incertitudes relatives à des valeurs de mesure pour chacune d'une pluralité de sorties de capteur radar correspondant à chaque point de données radar respectif, la pluralité de sorties de capteur radar comprenant une estimation de distance, une estimation de vitesse, ou une estimation d'angle.

3. Système radar (300) comprenant :

   un capteur radar (308) selon l'une quelconque des revendications précédentes ; et
   un processeur radar central (304) configuré pour recevoir ledit signal généré et poursuivre le ou les objets (250) sur la base de la pluralité de points de données radar et de l'élément de données pour chaque point de données radar respectif.

4. Système radar selon la revendication 3, dans lequel le processeur radar central est configuré pour recevoir un ou plusieurs paramètres de capteur radar en provenance du capteur radar.

5. Système radar selon la revendication 4, dans lequel le processeur radar central est configuré pour calculer une matrice de covariance pour chaque point de données radar respectif en utilisant en entrée le SNR pour chaque point de données radar et le ou les paramètres de capteur radar.

6. Procédé (1100) comprenant :

   la production (1102), au niveau d'un capteur radar (108), d'une pluralité de points de données radar à partir de réflexions de signaux radar (R1, RN) reçues au niveau du capteur radar ;
   pour un ou plusieurs points de données radar respectifs de la pluralité de points de données radar, le calcul (1104), au niveau du capteur radar, d'une matrice de covariance pour chaque point de données radar respectif en utilisant comme entrées un ou plusieurs paramètres radar, la matrice de covariance indiquant une précision de mesure correspondant au point de données radar respectif, et le ou les paramètres radar comprenant un rapport signal/bruit, noté SNR, de chaque point de données radar respectif dans la pluralité de points de données radar, et au moins un élément parmi : des informations de configuration d'une pluralité d'antennes couplées au capteur radar, une bande passante d'acquisition radar, une durée de chirp de séquence radar, une fréquence de chirp de séquence radar, ou un nombre de chirps par trame dans une séquence radar ; et

la transmission (1106), par le capteur radar, de la pluralité de points de données radar et de la matrice de covariance calculée pour chaque point de données radar respectif à un processeur radar central (304) pour la poursuite d'objets.

7. Procédé selon la revendication 6, dans lequel la matrice de covariance comprend une pluralité d'incertitudes relatives à des valeurs de mesure correspondant à chacune d'une pluralité de sorties de capteur radar pour chaque point de données radar respectif.

8. Procédé selon l'une quelconque des revendications 6 à 7 précédentes, dans lequel la pluralité de sorties de capteur radar comprend une estimation de distance et/ou une estimation de vitesse et/ou une estimation d'angle.

9. Procédé selon l'une quelconque des revendications 6 à 8 précédentes, comprenant en outre la fourniture d'un ou de plusieurs paramètres de capteur radar au processeur radar central.

FIG. 1

EP 4 455 727 B1

# FIG. 2

FIG. 3

**FIG. 4**

**FIG. 5**

**FIG. 6**

FIG. 7

FIG. 8

**FIG. 9**

**FIG. 10**

1100

1102

1104

1106

**FIG. 11**

EP 4 455 727 B1

**FIG. 12**

23

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- GB 2564085 A